# EUROPÄISCHE PATENTSCHRIFT

(11) **EP 1 031 181 B1**
(45) Veröffentlichungstag und Bekanntmachung des Hinweises auf die Patenterteilung: **30.01.2002**
(21) Anmeldenummer: 98955252.6
(22) Anmeldetag: 10.11.1998
(51) Int. Cl.: H02M 5/10

(54) **SCHALTUNG ZUM UMFORMEN, SCHALTEN, REGELN ODER STEUERN ELEKTRISCHER LEISTUNG**
CIRCUIT FOR TRANSFORMING, SWITCHING, ADJUSTING OR CONTROLLING ELECTRIC POWER
CIRCUIT DE TRANSFORMATION, DE COMMUTATION, DE REGLAGE OU DE COMMANDE D'UNE PUISSANCE ELECTRIQUE

(30) Priorität: 11.11.1997 AT 190897
(43) Veröffentlichungstag der Anmeldung: 30.08.2000
(73) Patentinhaber: Croce, Wolfgang, 8052 Graz/Attendorf (AT); Danhofer, Günther, 8020 Graz (AT)
(72) Erfinder: Croce, Wolfgang, 8052 Graz/Attendorf (AT); Danhofer, Günther, 8020 Graz (AT)
(74) Vertreter: Köhler-Pavlik, Johann, Dipl.-Ing.
(86) Internationale Anmeldenummer: AT9800277
(87) Internationale Veröffentlichungsnummer: WO9925061

(56) Entgegenhaltungen:
- EP-A- 0 053 413
- EP-A- 0 570 839
- DE-A- 3 511 182
- DE-U- 29 707 769
- US-A- 4 896 092
- US-A- 5 352 346
- US-A- 5 545 971

## Beschreibung

Die Erfindung betrifft eine Schaltung zum Umformen, Schalten, Regeln oder Steuern elektrischer Leistung, mit einer elektrischen Quelle, einer Last, und zumindest einer Einrichtung zum Umformen, Schalten, Regeln oder Steuern der an der Last resultierenden elektrischen Leistung.

Das Umformen, Schalten, Regeln und Steuern elektrischer Leistung umfaßt in diesem Zusammenhang alle Verfahren bzw. Schaltungsanordnungen mit denen eine von einem Netz angebotene elektrische Leistung an einen Verbraucher zu einem gewünschten Ausmaß, in einer gewünschten Art und zu einem gewünschten Zeitpunkt weitergegeben wird. Die Regelung oder Steuerung kann dazu dienen, eine bestimmte veränderliche Leistung an einem Verbraucher bereitzustellen oder an einem veränderlichen Verbraucher immer dieselbe Leistung bereitzustellen. Auch ein Schalten elektrischer Leistung ist in diesem Zusammenhang eingeschlossen. Üblicherweise erfolgt ein Regeln oder Steuern elektrischer Leistung durch Verändern der Spannung und/oder des Stromes der Quelle. Ein Umformen elektrischer Leistung tritt beispielsweise bei der Gleichrichtung auf, bei der eine Wechselspannung in eine Gleichspannung umgeformt wird.

Früher wurde ein Verändern der Leistung beispielsweise mittels Vorschaltwiderständen erreicht, die mit Hilfe von analogen Schaltern zu- bzw. weggeschaltet wurden. Neben der begrenzten Schaltfrequenz hat eine solche Lösung auch den Nachteil, daß die Veränderung nur in festen Stufen erfolgen kann. Darüber hinaus treten in den Vorschaltwiderständen sehr hohe Verluste in Form von Wärme auf, welche über Kühlungen abgeführt werden muß. Leistungshalbleiter anstelle analoger Schalter brachten zwar Verbesserungen im Schaltverfahren, aber keine Verringerung der Verluste.

Ohne Widerstände erfolgt ein Umformen, Schalten, Regeln oder Steuern mit elektronischen Ventilen, welche die Leistung über die Spannung oder den Strom beispielsweise durch Impulsbreitenmodulation verändern. Unter dem Begriff elektronischer Ventile werden gesteuerte und ungesteuerte Halbleiterbauelemente subsummiert. Die gesteuerten Halbleiterbauelemente werden entweder durch den einer Elektrode zugeführten elektrischen Strom oder durch das einer solchen Elektrode angelegte elektrische Potential gesteuert. Dazu zählen beispielsweise bipolare und unipolare Transistoren, Thyristoren od. vergleichbare elektronische Bauelemente. Dioden, bei denen der Strom eine Funktion der Spannung ist, zählen beispielsweise zu den ungesteuerten elektronischen Ventilen. In durchgeschaltetem Zustand weisen die elektronischen Ventile Durchlaßverluste auf, da an den Ventilen im durchgeschalteten Zustand immer eine gewisse Spannung abfällt. Diese Verluste sind zwar geringer als jene in Vorschaltwiderständen, können aber insbesondere bei sehr hohen Strömen oder sehr hohen Spannungen trotzdem ein beträchtliches Ausmaß annehmen. In solchen Fällen müssen diese elektronischen Ventile entsprechend dimensioniert werden und üblicherweise auch mit entsprechenden Kühlkörpern ausgestattet werden, sodaß die in Wärme umgewandelten Verluste abgeführt werden können.

Viele Schaltungen dienen dazu, Abweichungen elektrischer Parameter der Versorgung auszugleichen und die Energie an einer Last von solchen Versorgungsschwankungen unabhängig zu halten. Dazu wird der Versorgung mittels Transformatoren eine Spannung tiberlagert, welche derartige Abweichungen ausgleicht. Beispielsweise beschreibt die DE 35 11 182 A1 eine Transformatorschaltung mit einer Stelleinheit, über welche die Amplitude einer von einer Spannungsquelle abgegebenen Versorgungsspannung verändert werden kann, Die DE 297 07 769 U1 offenbart eine Schaltungsanordnung zum Einstellen einer Wechselstromverbraucherspannung. Für eine vereinfachte Art der Spannungseinstellung ist der Quelle ein mit einer Steuerung verbundener Transformator überlagert. Der Wechselspannungsregler gemäß der US 5 545 971 A verwendet einen mit einer Steuereinrichtung verbundenen Transformator um eine Regelung der Ausgangsspannung zustande zu bringen, welche unabängig von allfälligen Versorgungs- oder Lastschwankungen ist. Bei den in diesen Schaltungen verwendeten Transformatoren handelt es sich jeweils um Leistungstransformatoren, welche entsprechende Verluste verursachen.

Aufgabe der vorliegenden Erfindung ist daher die Schaffung einer Schaltung, durch welche die beim Umformen, Schalten, Regeln oder Steuern elektrischer Leistung auftretenden Verluste deutlich reduziert werden können. Die Schaltung soll möglichst kostengünstig realisierbar sein, sodaß eine breite Anwendbarkeit gesichert ist.

Diese Aufgabe wird dadurch gelöst, daß die oder jede Einrichtung zum Umformen, Schalten, Regeln oder Steuern der elektrischen Leistung durch zumindest einen Transformator gebildet ist, wobei die Sekundärseite des oder jedes Transformators der Quelle überlagert und die Primärseite des oder jedes Transformators mit einer Steuereinrichtung verbunden ist, welche Steuereinrichtung zu vorgegebenen Zeitpunkten und mit vorgegebener Zeitdauer im wesentlichen zum Zeitpunkt des Nulldurchganges der Spannung bzw. des Stromes der Quelle eine Spannung bzw. ein Strom hervorgeruft, und an der Sekundärseite des oder jedes Transformators eine Spannung bzw. ein Strom gleicher Amplitude wie die Spannung bzw, der Strom der Quelle induziert wird, sodaß zu den vorgegebenen Zeitpunkten und während der vorgegebenen Zeitdauer die Spannung bzw. der Strom der Quelle und die Spannung bzw. der Strom des oder jedes Transformators einander aufheben. Unter dem Begriff Quelle können sowohl Spannungsquellen, als auch Stromquellen verstanden werden. Der oder jeder Transformator bildet eine Gegenquelle, welche der Quelle überlagert wird und ersetzt die herkömmlichen elektronischen Ventile, wie Dioden, Transistoren, od. dgl., weshalb deren Durchlaßverluste ebenfalls wegfallen. Dadurch, daß die Spannung bzw. der Strom an der Sekundärseite des oder jedes Transformators gleicher Amplitude wie die Spannung bzw. der Strom der Quelle ist, ergibt sich bei eingeschalteter Gegenspannungsquelle aus der Sicht der Last die Spannung Null, da Quelle und Gegenquelle zu den vorgegebenen Zeitpunkten und während der vorgegebenen Zeitdauer einander aufheben. Dadurch, daß die Steuereinrichtung eine Spannung bzw. einen Strom im wesentlichen zum Zeitpunkt des Nulldurchganges der Quellspannung bzw. des Quellstromes hervorgeruft, wird gewährleistet, daß der oder jeder Transformator nur dann aktiviert wird, wenn kein Laststrom über dessen Sekundärseite fließt und somit die Ansteuerverluste gegeben durch das Produkt der sekundärseitigen Spannung und des sekundärseitigen Stromes minimal sind. Die Veränderung der elektrischen Leistung erfolgt ausschließlich über zeitliche Parameter der Gegenquelle(n). Da in diesen Fällen kein Strom fließt, ist die benötigte Leistung der durch den oder jeden Transformator gebildeten Gegenquelle, welche aus dem Produkt aus Spannung und Strom resultiert, somit auch vernachlässigbar gering. An der Last resultiert eine Leistung, welche aus der Überlagerung der Quellspannung und der Gegenspannung oder dem Quellstrom und dem Gegenstrom in Zusammenhang mit dem Lastwiderstand resultiert. Durch die Erfindung fällt das mit einem Widerstand behaftete Element im Stromkreis, an dem eine Spannung abfällt, welche in Verlustwärme umgewandelt wird, weg, Durch die erhebliche Reduktion der Verluste können die erforderlichen Bauteile wesentlich kleiner ausgeführt werden und Kühlkörper vermieden werden. Somit werden Schaltungen zur Durchführung des erfindungsgemäßen Verfahrens wesentlich kleiner, leichter und auch billiger ausfallen. Dies eröffnet bei einer Reihe von Anwendungen, insbesondere aber beim Auftreten hoher Ströme und/oder Spannungen neue Perspektiven.

Um eine entsprechende Änderung der Leistung zu erreichen, wird mit Hilfe der Steuereinrichtung die Frequenz und/oder das Tastverhältnis der Spannung bzw. des Stromes der Sekundärseite des oder jedes Transformators verändert. Diese Parameter lassen sich relativ leicht durch eine entsprechende Steuerelektronik und Leistungselektronik, welche die Primärspannung oder den Primärstrom des oder jedes Transformators erzeugt verändern.

Vorteilhafterweise ist der Durchmesser des Drahtes bzw. die Anzahl der Drahtlitzen, welche die Sekundärwicklung zumindest eines Transformators bilden, groß gegenüber dem Durchmesser des Drahtes bzw. der Anzahl der Drahtlitzen ist, weiche die Primärwicklung zumindest eines Transformators bilden, und/oder daß die Windungszahl der Primärwicklung zumindest eines Transformators groß gegenüber der Windungszahl der Sekundärwicklung zumindest eines Transformators ist. Dadurch wird erzielt, daß durch Aufbringen eines kleinen primärseitigen Stromes oder einer kleinen primärseitigen Spannung ein ausreichend großer sekundärseitiger Strom oder eine ausreichend große sekundärseitige Spannung erzielt wird, welche dem Quellstrom bzw, der Quellspannung zum Zwecke der Veränderung der Leistung an einer Last überlagert wird. Um mit einem möglichst niedrigen Strom bzw. einer möglichst niedrigen Spannung an der Primärseite des Transformators einen möglichst hohen Strom bzw. eine möglichst hohe Spannung an der Sekundärseite hervorzurufen, ist aber nicht nur das Windungsverhältnis und die Drahtgeometrie ausschlaggebend. Die Sekundärspannung eines magnetisch gekoppelten Kreises ist proportional der zeitlichen Änderung des magnetischen Flusses. Durch rasche Änderungen beispielsweise der primärseitigen Spannung kann eine hohe Sekundärspannung erzeugt werden, welche weit über den durch die Windungsverhältnisse festgelegten Werte liegen würde. Diese Methode wird beispielsweise bei einem Zündtransformator für eine Blitzlampe angewandt, wo mit möglichst geringer primärseitiger Leistung eine möglichst hohe Zündspannung erzeugt wird. Außer der hohen Anstiegsgeschwindigkeit der primärseitigen Spannung sind für eine möglichst große sekundärseitige Spannung die Wicklungsverhältnisse (Windungszahl, Drahtquerschnitte), die magnetische Kopplung zwischen Primär- und Sekundärkreis, das verwendete magnetische Kernmaterial und die Größe des Transformators ausschlaggebend, In der Praxis wird der Transformator möglichst klein gewählt, damit dieser bei dem durch ihn fließenden Laststrom bei fehlender primärseitiger Ansteuerung möglichst wenig magnetische Energie speichern kann und somit möglichst schnell in Sättigung geht.

Vorteilhafterweise ist die Einrichtung zum Verändern der Parameter der oder jeder Gegenquelle durch einen Mikrokontroller oder Mikroprozessor gebildet. Dies bietet einen erhöhten Grad an Flexibilität und ist mit niedrigen Kosten realisierbar.

Wenn die Steuereinrichtung mit der Quelle verbunden ist, kann eine Synchronisierung der Steuerung mit der Quelle erfolgen, sodaß die Verhältnisse optimiert werden.

Weitere Merkmale der Erfindung werden anhand der beigefügten Abbildungen und Zeitdiagramme näher erläutert.

Darin zeigen
- Fig. 1: ein Schema einer Schaltung zum Umformen, Schalten, Regeln oder Steuern elektrischer Leistung,
- Fig. 2: eine Schaltung zur Durchführung des erfindungsgemäßen Verfahrens bei einer Wechselspannungsquelle,
- Fig. 3a-3c: Zeitverläufe charakteristischer Größen aus der Schaltung gemäß Fig. 2,
- Fig. 4a-4c: alternative Zeitverläufe charakteristischer Größen aus der Schaltung gemäß Fig. 2,
- Fig. 5: eine Schaltung zur Durchführung des erfindungsgemäßen Verfahrens bei einer Gleichspannungsquelle,
- Fig. 6a-6d: Zeitverläufe charakteristischer Größen aus der Schaltung gemäß Fig. 5,
- Fig. 7a-7e: einen Einweggleichrichter nach dem Stand der Technik und nach verschiedenen Ausführungsformen der Erfindung,
- Fig. 8a-11c: stark vereinfachte Zeitverläufe charakteristischer Größen aus den Schaltungen gemäß Fig. 7b bis 7e für unterschiedliche Fälle,
- Fig. 12: die Schaltung einer Zweiweggleichrichtung,
- Fig. 13a u 13b: Zeitverläufe charakteristischer Größen aus der Schaltung gemäß Fig. 12,
- Fig. 14: eine erfindungsgemäße Schaltung zur Zweiweggleichrichtung ohne Dioden, und
- Fig. 15a-15d: die Zeitverläufe charakteristischer Größen aus der Schaltung gemäß Fig. 14.

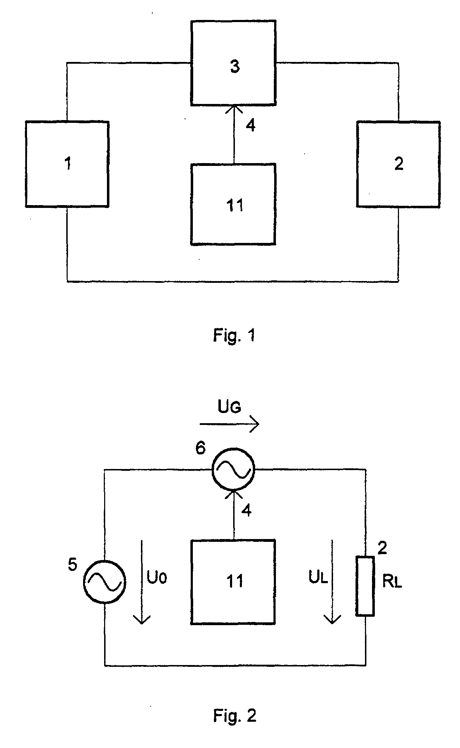

Fig. 1 zeigt das Schema einer Schaltung zum Umformen, Schalten, Regeln oder Steuern elektrischer Leistung. Dabei ist eine Quelle 1 über eine Einrichtung 3 mit einer Last 2 verbunden. Die Quelle 1 kann eine Spannungs- oder Stromquelle sein. Die Einrichtung 3 kann durch einen Analogschalter, einen Spannungsteiler, eine Regelschaltung od. dgl., je nach Anwendungsfall gebildet sein. Über einen allfälligen Steuereingang 4 kann die an der Last 2 gelangende elektrische Leistung geschaltet oder verändert werden. Eine Steuereinrichtung 11 liefert die entsprechenden Signale an den Steuereingang 4. Ein Beispiel einer solchen Schaltung wäre eine Einweggleichrichter, bei dem die Einrichtung 3 durch eine Diode gebildet wird. Die Leistungsregelung an einem Widerstand kann beispielsweise über ein gesteuertes elektronisches Ventil, wie einen Transistor, dessen Basis den Steuereingang 4 repräsentiert, erfolgen.

In Fig. 2 ist eine Schaltung zur Durchführung des erfindungsgemäßen Verfahrens bei einer Wechselspannungsquelle dargestellt. Dabei wird der Spannungsquelle 5 eine Gegenspannungsquelle 6 überlagert, welche zum Umformen, Schalten, Regeln oder Steuern der an der Last 2 resultierenden Leistung P_{L} bzw. Spannung U_{L} über einen Steuereingang 4 verfügt, der mit einer entsprechenden Steuereinrichtung 11 verbunden ist. Vorteilhafterweise ruft die Gegenspannungsquelle 6 eine Spannung U_{G} hervor, welche gleich der Spannung Uₒ der Spannungsquelle 5 ist. Durch Ein- und Ausschalten der Gegenspannungsquelle 6 kann die Spannung U_{L} und somit die Leistung P_{L} am Lastwiderstand R_{L} verändert werden. Bei bekannten Verfahren wird diese Leistungsregelung beispielsweise mit einem Transistor durchgeführt, der neben Schaltverlusten im durchgeschalteten Zustand nicht unerhebliche Durchlaßverluste aufweist. Diese überragen insbesondere bei niedrigen Schaltfrequenzen die Schaltverluste. Gerade bei Anwendungsfällen mit relativ hohem Strom oder relativ hoher Spannung, sind diese Durchlaßverluste beträchtlich und erfordern entsprechend dimensionierte Halbleiter und Kühlkörper. Im Gegensatz dazu treten bei der Erfindung keine Durchlaßverluste auf, da die elektronischen Ventile durch eine Gegenquelle 6 ersetzt sind. Die Gegenspannungsquelle kann beispielsweise durch einen Transformator realisiert werden, dessen Sekundärseite in den Stromkreis der Schaltung geschaltet wird und dessen Primärseite mit einer entsprechenden, Steuerspannung angesteuert wird. In der Praxis wird die Sekundärwicklung des die Gegenspannungsquelle 6 repräsentierenden Transformators eine niedrige Windungszahl und einen großen Drahtquerschnitt aufweisen, sodaß die durch den ohm'schen Widerstand der Wicklung bedingten Verluste niedrig ausfallen. Dagegen weist die Primärwicklung des Transformators relativ hohe Windungszahl auf. Bei Anpassung der Gegenspannung an die Quellspannung sind die Ansteuerleistungen der Primärwicklung vernachlässigbar, da nur Spannungen bei idealerweise keinem Stromfluß erzeugt werden müssen.

Selbstverständlich ist eine Anwendung des erfindungsgemäßen Verfahrens auf Stromquellen in analoger Weise möglich.

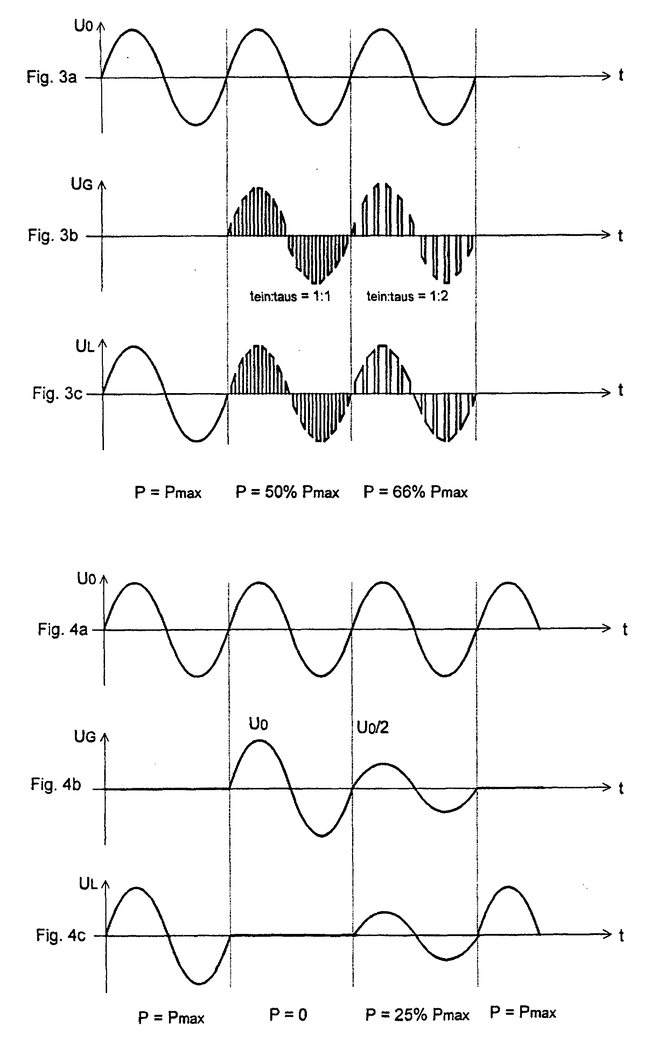

In den Fig. 3a-3c sind die Zeitverläufe der Quellspannung U₀, der Gegenspannung U_{G} sowie der Spannung U_{L} am Lastwiderstand dargestellt. Während der ersten Periode der Quellspannung U₀ wird keine Gegenspannung U_{G} induziert und es liegt somit die maximal mögliche Spannung U_{L} am Lastwiderstand R_{L} an, resultierend in einer maximalen Leistung P_{L}=Pₘₐₓ am Lastwiderstand. Während der zweiten Periode wird eine Gegenspannung U_{G}, welche gleiche Amplitude wie die Quellspannung U₀ aufweist mit einer gewissen Frequenz ein- und ausgeschaltet, wobei das Verhältnis der Einschaltzeit tₑᵢₙ zur Ausschaltzeit tₐᵤₛ gleich 1 ist. Dadurch liegt am Lastwiderstand R_{L} die Spannung U_{L} nur die Halbe Zeit an, weshalb die resultierende Leistung P_{L} am Lastwiderstand R_{L} nur mehr 50% der maximalen Leistung Pₘₐₓ. Durch Veränderung des Tastverhältnisses tₑᵢₙ:tₐᵤₛ kann die Leistung P_{L} am Lastwiderstand R_{L} variiert werden. In der dritten Periode ist der Fall dargestellt, daß tₑᵢₙ:tₐᵤₛ=1:2 beträgt, somit liegt die Spannung U_{L} 2/3 der Zeit am Lastwiderstand R_{L} an, resultierend in einer Leistung P_{L}=66%Pₘₐₓ.

Aus den Zeitverläufen gemäß Fig. 4a-4c ist eine Variante dargestellt, bei der durch Variation der Amplitude der Gegenspannungsquelle U_{G} eine Veränderung der Spannung U_{L} und damit der Leistung P_{L} am Lastwiderstand R_{L} erreicht wird. Gegenüber der in den Fig. 3a-3c dargestellten Variante hat diese Lösung jedoch den Nachteil, daß immer ein Strom fließt, der besonders in der Gegenquelle Verluste hervorrufen kann. Im Falle gleich großer Spannungen U₀=U_{G} fließt während der Zeiten, in denen die Gegenspannungsquelle eingeschaltet ist kein Strom, und es resultieren daher auch keine Verluste.

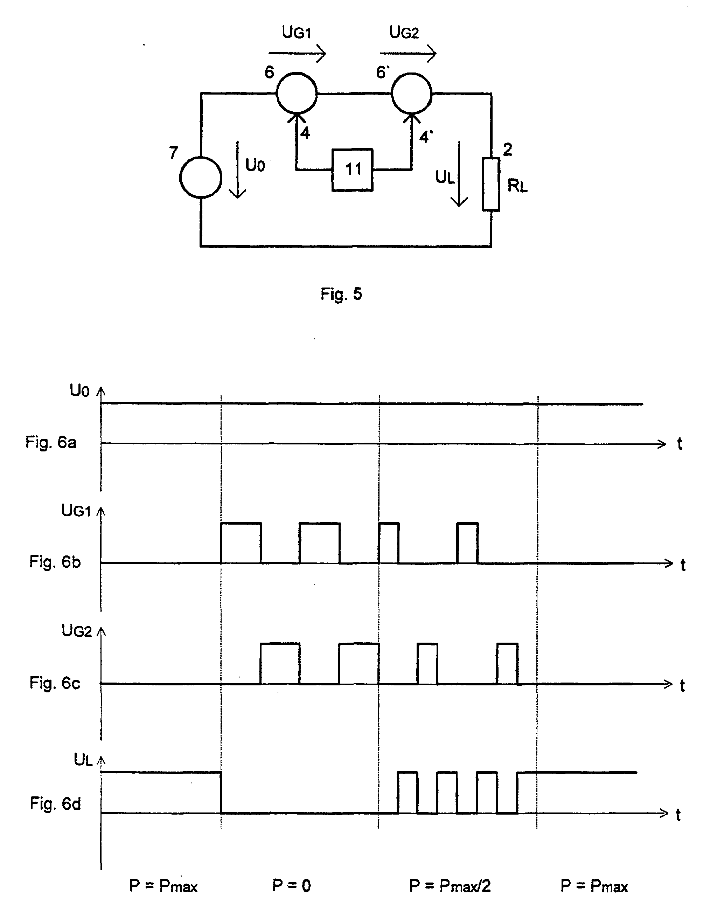

Fig. 5 zeigt eine Schaltung zur Durchführung des erfindungsgemäßen Verfahrens bei einer Gleichspannungsquelle 7. Erfindungsgemäß sind der Gleichspannungsquelle 7 zwei Gegenspannungsquellen 6, 6' überlagert, welche über die Steuereingänge 4, 4' geschaltet werden können. Es sind deshalb zwei Gegenspannungsquellen 6, 6' erforderlich, da bei der Realisierung dieser Gegenspannungsquellen 6, 6' durch Transformatoren diese zyklisch entmagnetisiert werden müssen. Daher wird zyklisch zwischen der Gegenspannungsquelle 6 und Gegenspannungsquelle 6' wechselweise hin- und hergeschaltet.

Aus den Zeitverläufen der Quellspannung U₀, der Gegenspannungen U_{G1} und U_{G2} sowie der resultierenden Spannung U_{L} am Lastwiderstand gemäß den Fig. 6a-6d wird die Funktion der Schaltung gemäß Fig. 5 erklärt. Die Gleichspannungsquelle 7 liefert eine Spannung U₀. Im ersten Zeitabschnitt liefern beide Gegenspannungsquellen 6, 6' keine Spannung, sodaß am Lastwiderstand R_{L} volle Spannung U_{L}=U₀ anliegt, resultierend in einer maximalen Leistung Pₘₐₓ an der Last 2. Während der zweiten Zeitspanne werden die Gegenspannungsquellen 6, 6', welche jeweils eine Spannung U_{G}=U₀ und U_{G2}=U₀ liefern, abwechselnd eingeschaltet sodaß am Lastwiderstand R_{L} keine Spannung anliegt. Während die eine Gegenspannungsquelle 6 eingeschaltet ist, wird die zweite Gegenspannungsquelle 6' entmagnetisiert und umgekehrt. Im dritten dargestellten Zeitintervall wird die Einschaltdauer tₑᵢₙ der Gegenspannungsquellen 6, 6' gegenüber der Ausschaltdauer verringert z.B. in einem Verhältnis tₑᵢₙ:tₐᵤₛ = 1:2, sodaß am Ausgang im Mittel die Hälfte der maximalen Leistung Pₘₐₓ resultiert. Mit der Schaltung gemäß Fig. 5 kann daher die Leistung an einer Last 2 ohne Verwendung elektronischer Ventile geschaltet, geregelt oder gesteuert werden.

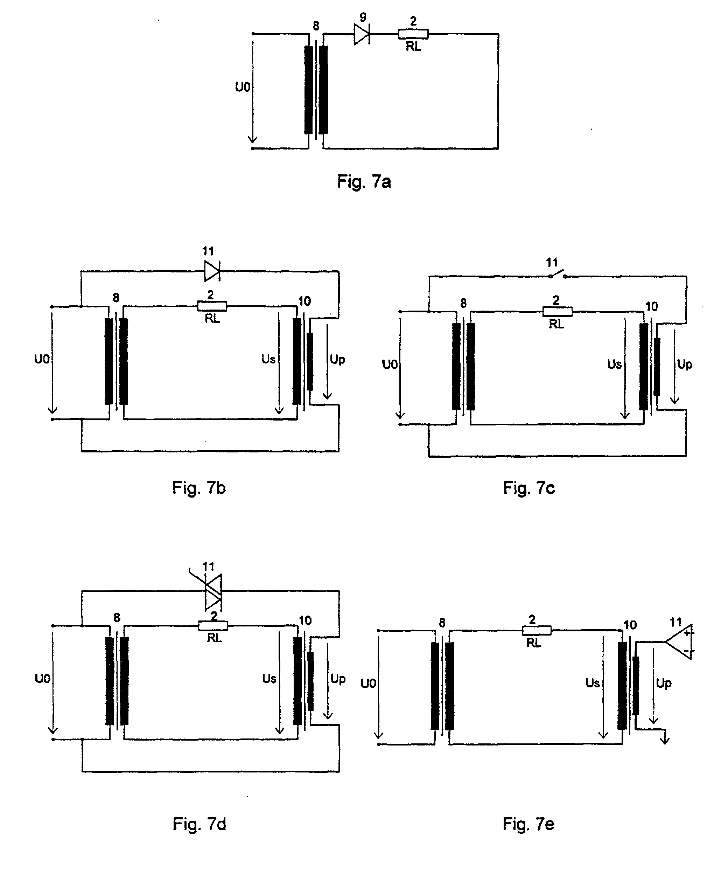

In den Fig. 7a bis 7e wird die Erfindung anhand eines Einweggleichrichters näher erläutert. Fig. 7a zeigt einen Einweggleichrichter in herkömmlicher Bauweise mit einer Gleichrichtdiode 9, welche die vom Netztransformator 8 herrührende Spannung an einer Last 2 gleichrichtet. In Fig. 7b wurde erfindungsgemäß die Einrichtung zum Umformen, Schalten, Regeln oder Steuern der elektrischen Leistung, in diesem Fall die Gleichrichtdiode 9, durch den Transformator 10 ersetzt, dessen Primärseite über die durch eine Diode gebildete Steuereinrichtung 11 mit der Eingangsspannung U₀ verbunden ist. Der Transformator 10 kann wesentlich kleiner ausgeführt werden, da an ihm nur eine sehr geringe Leistung abfällt. In Fig. 7c ist die Steuereinrichtung 11 durch einen Schalter gebildet. Fig. 7d zeigt eine Ausführungsvariante, bei der die Steuereinrichtung durch einen Triac gebildet ist. Schließlich zeigt Fig. 7e eine Ausfürhungsvariante der Erfindung, bei der die Steuereinrichtung 11 durch einen Operationsverstärker gebildet wird, wobei vorteilhafterweise eine Verbidnung mit der Quellspannung U₀ vorgesehen wird (nicht dargestellt). Zur Verdeutlichung der Reduktion der Leistung durch die erfindungsgemäße Schaltung werden im folgenden anhand der Figuren 7a und 7b die Verluste abgeschätzt. Bei Verwendung eines Netztransformators mit 460 VA, primär 230 Volt und 2 Ampere und sekundärseitig 11,5 Volt und 40 Ampere tritt bei Annahme von 0,75 Volt Spannungsabfall an der Gleichrichtdiode 9 eine Verlustleistung an der Gleichrichtdiode 9 von 0,75 Volt * 40 Ampere = 30 Watt auf. Im Gegensatz dazu gelten bei der Schaltung gemäß Fig. 7b folgende Werte auf: Transformator 10: primärseitig 230 Volt, 0,022 Ampere, sekundär 11,5 Volt und 0,43 Ampere, resultierend in einer Verlustleistung an der als Steuerungseinrichtung 11 auftretenden Diode von 0,75 Volt * 0,022 Ampere = 0,017 Watt. Die Verluste an dem Transformator 10, der erfindungsgemäß gegenüber der Schaltung gemäß Fig. 7a die Gleichrichtdiode 9 ersetzt, treten keine nennenswerte Verluste auf, da während des Ansteuerns des Trafos kein Laststrom über dessen Sekundärseite fließt, da die Quellspannung und die Sekundärspannung des Trafos 10 einander aufheben.

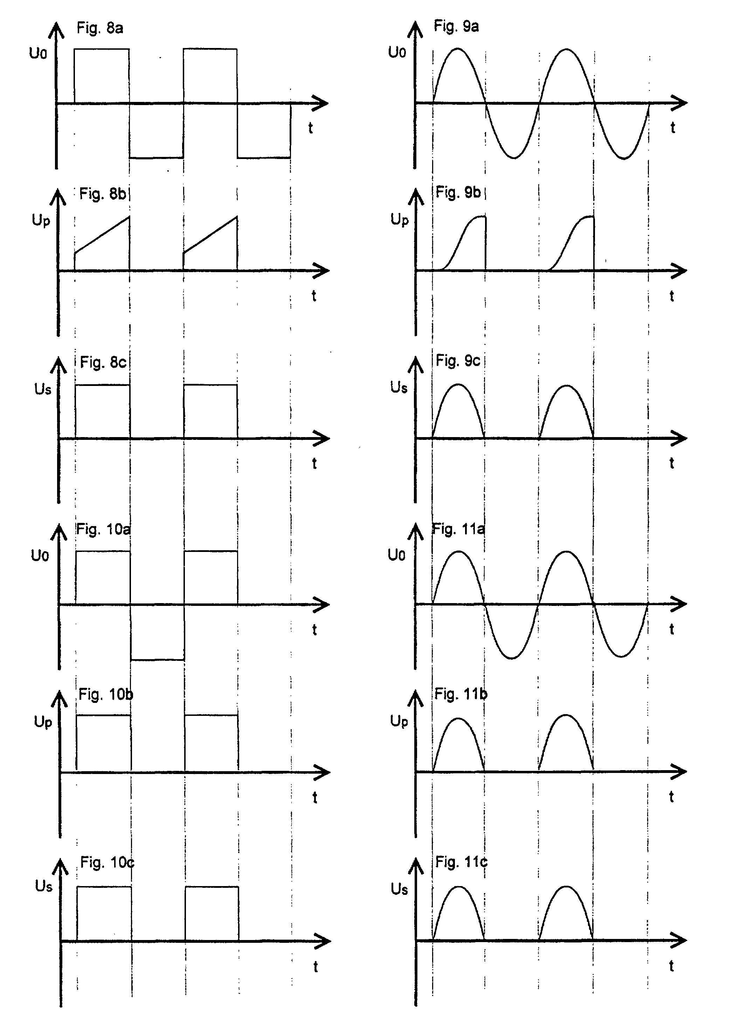

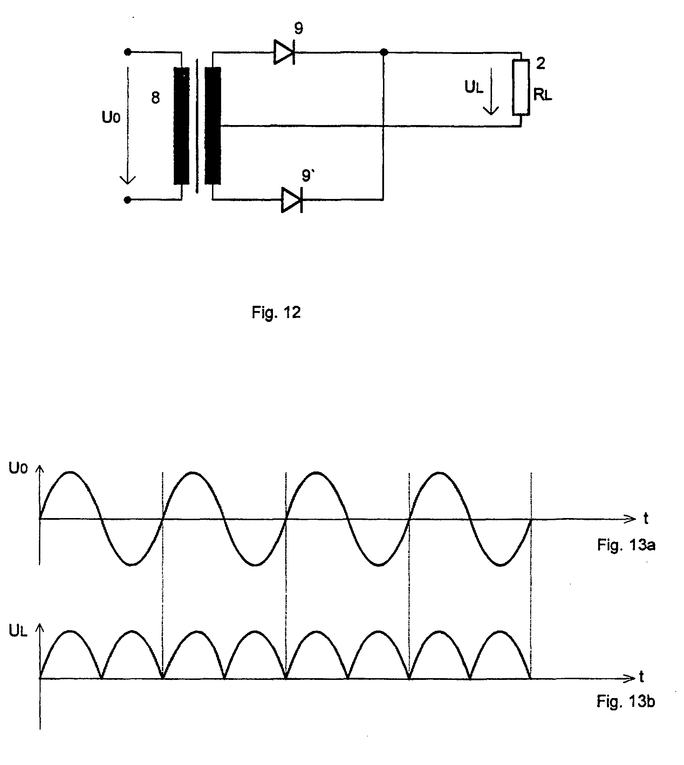

Die Fig. 8a bis 8c zeigen zur Verdeutlichung die stark vereinfachten Zeitverläufe einiger charakteristischer Größen aus den Schaltungen 7b bis 7e bei Verwendung eines Ferritkem-Übertragers für rechteckförmige Quellspannung U₀. Die primärseitige Spannung Uₚ des Transformators 10 weist einen Verlauf gemäß Fig. 8b auf, resultierend in einer sekundärseitigen Spannung Uₛ des Transformators gemäß Fig. 8c, welche der Quellspannung U₀ während der halben Periodendauer entspricht, wodurch nur jede zweite Halbwelle der Quellspannung U₀ an der Last 2 resultiert. Die Fig. 9a bis 9c zeigen die Zeitverläufe für die Quellspannung U₀, die Primärspannung Uₚ und Sekundärspannung Uₛ des Transformators 10 bei Verwendung eines Ferritkern-Übertragers für sinusförmige Quellspannung U₀. In den Fig. 10a bis 10c sowie 11a bis 11c sind die Zeitverläufe bei Verwendung eines Niederfrequenz- Transformators dargestellt.

Aus Fig. 12 ist zur Erläuterung eines anderen Einsatzfalles der Erfindung zunächst eine übliche Schaltung einer Zweiweggleichrichtung ersichtlich. Die Spannung wird mit Hilfe eines Netztransformators 8 übersetzt, dessen Sekundärwicklung eine Mittelanzapfung aufweist. Über zwei entsprechend angeordnete Gleichrichtdioden 9, 9' wird die Spannung an einem Lastwiderstand R_{L} gleichgerichtet. Ein allfälliger Kondensator zum Sieben der Ausgangsspannung am Lastwiderstand ist der Einfachheit halber nicht gezeichnet.

Aus den Fig. 13a und 13b sind die Verläufe der Netzspannung U₀ und der Spannung U_{L} am Lastwiderstand R_{L} in Abhängigkeit der Zeit dargestellt.

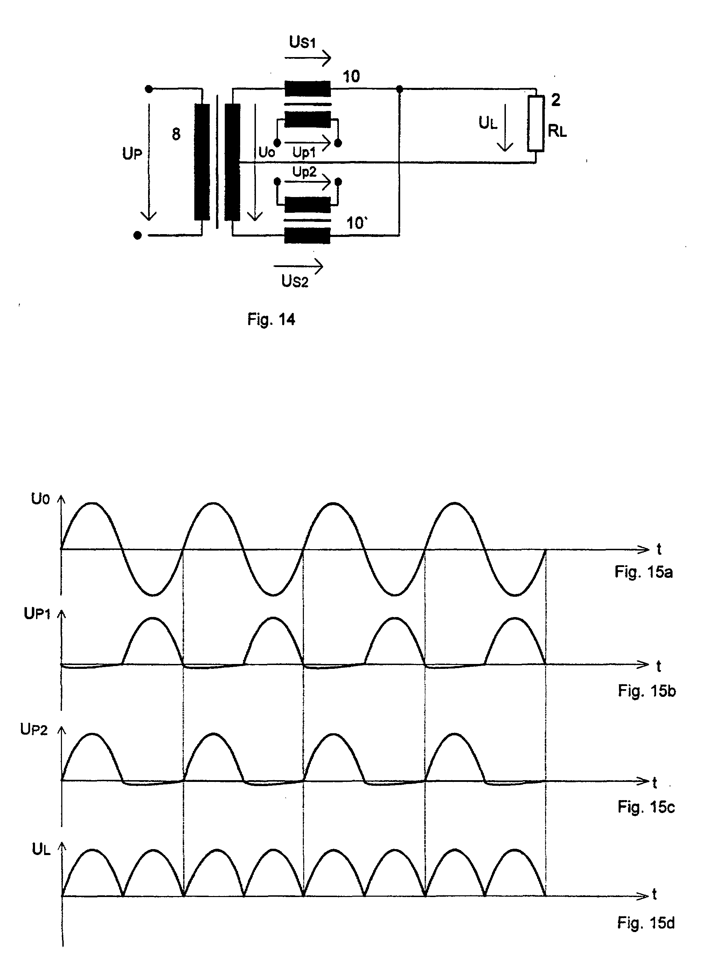

Fig. 14 zeigt eine Alternative der Zweiweggleichrichtung gemäß Fig. 12, bei der das erfindungsgemäße Verfahren angewandt wird. Somit können die elektronischen Ventile, in diesem Fall die Gleichrichtdioden 9, 9, durch zwei Gegenspannungsquellen, welche durch zwei Transformatoren 10, 10' realisiert werden, ersetzt werden. Die Transformatoren 10, 10' werden jeweils mit Ihrer Sekundärseite in den Stromkreis geschaltet. Primärseitig werden die Transformatoren 10, 10' mit einer entsprechenden Steuerung und Leistungselektronik, welche die entsprechende Primärspannung liefert, verbunden. Durch den Wegfall der Gleichrichtdioden 9, 9' fallen auch keine entsprechenden Durchlaßverluste der Halbleiterbauelemente an. Im Gegensatz zu Gleichrichtdioden, bei denen eine Spannung im Durchlaßfall anliegt, beschränken sich die Verluste bei der erfindungsgemäßen Schaltung auf die ohm'schen Verluste der Sekundärwicklung der Transformatoren 10, 10', welche sehr gering sind. Aufgrund der deutlich reduzierten Verluste können die Bauelemente auch entsprechend kleiner gestaltet und somit erheblich an Volumen eingespart werden. Dieser Vorteil wird dadurch verstärkt, daß die Wicklungen der beiden Transformatoren 10, 10' auf einem einzigen Ringkem platzsparend untergebracht werden. In der Praxis sind die Sekundärwicklungen der Transformatoren 10, 10' durch Drähte mit großem Durchmesser bzw. feinlitzige Drähte mit sehr geringer Windungszahl gebildet, während die Primärwicklungen entsprechend höhere Windungszahl aufweisen. Aufgrund der modemen Elektronik ist die notwendige Steuerungs- und Leistungselektronik sehr leicht, billig und sehr klein realisierbar, sodaß gegenüber dem Einsatz von Gleichrichtdioden 9, 9' zumindest bei sehr hohen Strömen und Spannungen extreme Vorteile resultieren.

Die Fig. 15a-15d zeigen die Zeitverläufe der Sekundärspannung U₀ des Netztransformators 8, der beiden Primärspannungen U_{P1} und U_{P2} der Transformatoren 10, 10' sowie der resultierenden Spannung U_{L} am Lastwiderstand R_{L} gemäß der Schaltung nach Fig. 14. Die Steuerung der Gegenquellen, in diesem Fall der Transformatoren 10, 10' erfolgt vorzugsweise mit Hilfe eines Mikrokontrollers oder Mikroprozessors, der aufgrund einer oder mehrerer Eingangsgrößen Leistungselektronik zur Erzeugung der Primärspannungen U_{P1} und U_{P2} der Transformatoren 10, 10' entsprechend ansteuert. Als Eingangsgröße wird dabei vorzugsweise auch die Frequenz und Polarität der Sekundärspannung U₀ herangezogen, welche auch über den Strom der Primärwicklungen der Transformatoren 10, 10' indirekt ermittelt werden kann. Es muß dabei gewährleistet sein, daß immer mindestens ein Transformator 10, 10' angesteuert wird, da sonst die Sekundärspannung U₀ kurzgeschlossen würde. Während der positiven Halbwelle der Sekundärspannung U₀ wird der zweite Transformator 10' durch eine Primärspannung U_{P2} derart angesteuert, daß dieser eine Sekundärspannung U_{S2} hervorruft, welche dieselbe Amplitude aufweist, wie die Sekundärspannung des Transformators 8, sodaß diese durch die Sekundärspannung U_{S2} des Transformators 10' aufgehoben wird. Der Transformator 10 wird hingegen nicht angesteuert, wodurch die volle Sekundärspannung U₀ am Lastwiderstand R_{L} anliegt. Im Falle der negativen Halbwelle von U₀ wird der Transformator 10 durch eine entsprechende Primärspannung U_{P1} angesteuert, daß die vom Transformator 8 gelieferte Sekundärspannungshalbwelle in positiver Polarität an den Lastwiderstand R_{L} gelangt. Es resultiert also dieselbe Spannung U_{L} am Lastwiderstand R_{L} wie beim Zweiweggleichrichter gemäß Fig. 7. Die Bereiche der minimal negativen Spannungen der Primärspannungen U_{P1} und U_{P2} der Transformatoren 10, 10' werden durch das Entmagnetisieren der Transformatoren verursacht. Dabei wird die im Transformator gespeicherte Kernenergie über die Primärseite zurückgespeist. Dieses Anwendungsbeispiel ist natürlich nicht auf Zweiweggleichrichter beschränkt. Das erfindungsgemäße Verfahren kann beispielsweise auch bei einem Brückengleichrichter angewandt werden, bei dem alle vier Gleichrichtdioden durch Gegenspannungsquellen, welche durch Transformatoren gebildet sind, ersetzt werden.

Um die Vorteile des erfindungsgemäßen Verfahrens weiter zu unterstreichen, sei als Beispiel die Anwendung bei einem Ausgangsgleichrichter eines Schweißgerätes angeführt. Die Verlustleistung der Gleichrichtdioden des Ausgangsgleichrichter eines Schweißgerätes mit 200 A Schweißstrom beträgt je nach Spannungsabfall an den Dioden (0,3 bis 0,5 V) ca. 60 bis 100 Watt. Die üblicherweise verwendeten Gleichrichtdioden sind entsprechend groß und teuer und müssen zusätzlich meist mit einem Kühlkörper versehen werden. Durch die Anwendung des erfindungsgemäßen Verfahrens tritt keine merkbare Verlustleistung im Ausgangsgleichrichter auf, wodurch wesentlich kleinere, leichtere und billigere Geräte resultieren. Die Anwendungsmöglichkeiten des erfindungsgemäßen Verfahrens bzw. der erfindungsgemäßen Schaltung sind sehr vielfältig. Besondere Vorteile ergeben sich allerdings bei Schaltungen, wo sehr hoher Strom und/oder sehr hohe Spannung am Ausgang an der Last auftritt, da in diesem Fall die Verlustleistungen herkömmlicher Schaltungen besonders hoch sind. Ein Beispiel für einen besonders hohen Strom ist ein Schweißgleichrichter. Hohe Spannungen treten beispielsweise bei Gleichstromkurzkupplungen auf.

## Patentansprüche

1. Schaltung zum Umformen, Schalten, Regeln oder Steuern elektrischer Leistung, mit einer elektrischen Quelle (1), einer Last (2) und zumindest einer Einrichtung (3) zum Umformen, Schalten, Regeln oder Steuern der an der Last (2) resultierenden elektrischen Leistung, **dadurch gekennzeichnet, daß** die oder jede Einrichtung (3) zum Umformen, Schalten, Regeln oder Steuern der elektrischen Leistung durch zumindest einen Transformator (10, 10') gebildet ist, wobei die Sekundärseite des oder jedes Transformators (10, 10') der Quelle (1) überlagert und die Primärseite des oder jedes Transformators (10, 10') mit einer Steuereinrichtung (11) verbunden ist, welche Steuereinrichtung (11) zu vorgegebenen Zeitpunkten und mit vorgegebener Zeitdauer im wesentlichen zum Zeitpunkt des Nulldurchganges der Spannung bzw. des Stromes der Quelle (1) eine Spannung bzw. ein Strom hervorruft, und an der Sekundärseite des oder jedes Transformators (10, 10') eine Spannung bzw. ein Strorn gleicher Amplitude wie die Spannung bzw. der Strom der Quelle (1) induziert wird, sodaß zu den vorgegebenen Zeitpunkten und während der vorgegebenen Zeitdauer die Spannung bzw. der Strom der Quelle (1) und die Spannung bzw. der Strom des oder jedes Transformators (10, 10') einander aufheben.

2. , Schaltung nach Anspruch 1, **dadurch gekennzeichnet, daß** mit Hilfe der Steuereinrichtung (11) die Frequenz (f) und/oder das Tastverhältnis (tₑᵢₙ:tₐᵤₛ) der Spannung bzw, des Stromes an der Sekundärseite des oder jedes Transformators (10, 10') verändert wird.

3. Schaltung nach Anspruch 1 oder 2, **dadurch gekennzeichnet, daß** der Durchmesser des Drahtes bzw. die Anzahl der Drahtlitzen, welche die Sekundärwicklung zumindest eines Transformators (10, 10') bilden, groß gegenüber dem Durchmesser des Drahtes bzw. der Anzahl der Drahtlitzen ist, welche die Primärwicklung zumindest eines Transformators (10, 10') bilden, und/oder daß die Windungszahl der Primärwicklung zumindest eines Transformators (10, 10') groß gegenüber der Windungszahl der Sekundärwicklung zumindest eines Transformators (10, 10') ist.

4. Schaltung nach einem der Ansprüche 1 bis 3, **dadurch gekennzeichnet, daß** die Steuereinrichtung (11) durch einen Mikrokontroller oder Mikroprozessor gebildet ist.

5. Schaltung nach einem der Ansprüche 1 bis 4, **dadurch gekennzeichnet, daß** die Steuereinrichtung (11) mit der Quelle (1) verbunden ist.

## Claims

1. A circuit for transforming, switching, adjusting or controlling electric power, comprising an electric source (1) , a load (2), and at least one device (3) for transforming, switching, adjusting or controlling the electric power resulting on the load (2), **characterized in that** the or each device (3) for transforming, switching, adjusting or controlling the electric power is formed by at least one transformer (10, 10'), wherein the secondary side of the or each transformer (10, 10') overlays the source (1), and the primary side of the or each transformer (10, 10') is connected with a control device (11), which control device (11) causes a voltage or a current, respectively, at predetermined points of time and for predetermined periods of time, substantially at the point of time of zero crossing of the voltage or of the current, respectively, of the source (1), and on the secondary side of the or each transformer (10, 10'), a voltage or current, respectively, of identical amplitude as the voltage or current, respectively, of the source (1) is induced so that at the predetermined points of time and for the predetermined periods of time, the voltage or the current, respectively, of the source (1) and the voltage or the current, respectively, of the or each transformer (10, 10') will cancel each other out.

2. A circuit according to claim 1, **characterized in that** the frequency (f) and/or the pulse ratio (tₒₙ:t_{off}) of the voltage or current, respectively, at the secondary side of the or each transformer (10, 10') is changed by means of the control device (11).

3. A circuit according to claim 1 or 2, **characterized in that** the diameter of the wire or the number of wire strands forming the secondary winding of at least one transformer (10, 10') is large relative to the diameter of the wire or to the number of wire strands forming the primary winding of at least one transformer (10, 10'), and/or that the number of turns of the primary winding of at least one transformer (10, 10') is high relative to the number of turns of the secondary winding of at least one transformer (10, 10').

4. A circuit according to any one of claims 1 to 3, **characterized in that** the control device (11) is formed by a microcontroller or a microprocessor.

5. A circuit according to any one of claims 1 to 4, **characterized in that** the control device (11) is connected with the source (1).

## Revendications

1. Circuit pour la transformation, la commutation, le réglage ou la commande d'une puissance électrique, équipé d'une source électrique (1), d'une charge (2) et au moins d'un dispositif (3) pour la transformation, la commutation, le réglage ou la commande de la puissance électrique résultante sur la charge (2), **caractérisé en ce que** le dispositif ou chaque dispositif (3) pour la transformation, la commutation, le réglage ou la commande de la puissance électrique est formé par au moins un transformateur (10, 10'), le côté secondaire du ou de chaque transformateur (10, 10') étant superposé à la source (1) et le côté primaire du ou de chaque transformateur (10, 10') étant relié à un dispositif de commande (11), lequel dispositif de commande (11) entraîne une tension ou un courant à des moments prédéfinis et avec une durée prédéfinie essentiellement au moment du passage par zéro de la tension, respectivement du courant, de la source (1), et une tension, respectivement un courant, d'amplitude identique à la tension, respectivement au courant de la source (1) étant induit sur le côté secondaire du ou de chaque transformateur (10, 10'), de sorte que, aux moments prédéfinis et pendant la durée prédéfinie, la tension, respectivement le courant, de la source (1) et la tension, respectivement le courant, du ou de chaque transformateur (10, 10') se suppriment mutuellement.

2. Circuit selon la revendication 1, **caractérisé en ce que** la fréquence (f) et/ou le taux d'impulsions (Tentrée/Tsortie) de la tension ou du courant sur le côté secondaire du ou de chaque transformateur (10, 10') sont/est modifiés à l'aide du dispositif de commande (11).

3. Circuit selon la revendication 1 ou 2, **caractérisé en ce que** le diamètre du fil ou le nombre des fils souples, qui forment l'enroulement secondaire d'au moins un transformateur (10, 10'), est grand par rapport au diamètre du fil, respectivement au nombre des fils souples qui forment l'enroulement primaire d'au moins un transformateur (10, 10'), et/ou **en ce que** le nombre de spires de l'enroulement primaire d'au moins transformateur (10, 10') est grand par rapport au nombre de spires de l'enroulement secondaire d'au moins un transformateur (10, 10').

4. Circuit selon l'une quelconque des revendications 1 à 3, **caractérisé en ce que** le dispositif de commande (11) est formé par un microcontrôleur ou microprocesseur.

5. Circuit selon l'une quelconque des revendications 1 à 4, **caractérisé en ce que** le dispositif de commande (11) est relié à la source (1).
